# EUROPEAN PATENT APPLICATION

(11) **EP 4 804 571 A1**
(43) Date of publication of application: **09.09.2026**
(21) Application number: 25161707.2
(22) Date of filing: 04.03.2025
(51) Int. Cl.: H04W 4/021, H04L 47/10, H04W 4/40, H04W 88/04

(54) **MANAGING LOAD DURING VEHICLE-TO-EVERYTHING COMMUNICATIONS**

(71) Applicant: Valeo Comfort and Driving Assistance, 94000 Créteil (FR)
(72) Inventor: ABU ALHOUL, Mohammad, 94000 Créteil (FR)
(74) Representative: Delaval, Guillaume Laurent

(57) **Abstract**

The disclosure relates to a method implemented by a TCU for managing load during V2X communications. The TCU comprises a data storage containing dynamic information representing a relation between unique identifiers and a respective filtering duration. The method comprises receiving messages from multiple remote emitters, identifying the unique identifier of the respective remote emitter, and forwarding received messages to one or more processes based on the identified unique identifier and on the dynamic information. For each message among at least one message received, the method comprises obtaining areas of interest, identifying a location of the respective remote emitter, identifying one or more respective areas of interest containing the identified location, and updating the dynamic information to enable an up-to-date of the forwarding frequency for the respective remote emitter, based on the identified one or more areas of interest. The method forms an improved solution for managing load during V2X communications.

## Description

### TECHNICAL FIELD

The disclosure relates to the field of computer programs and systems, and more specifically to a method implemented by a Telematic Control Unit (TCU) of a vehicle for managing load during Vehicle-to-Everything (V2X) communications, and to a computer program, computer readable storage medium, and TCU therefore.

### BACKGROUND

In the context of V2X communication systems, a significant challenge arises from network congestion, primarily due to an overwhelming influx of non-safety-related messages. These messages are often generated by vehicles and infrastructures equipped with extended sensing capabilities, which, while beneficial for enhancing situational awareness, can lead to a saturation of the communication network.

This saturation creates a bottleneck that hinders the effective prioritization of critical safety data, which is essential for the safe operation of vehicles and the overall traffic ecosystem.

The consequences of message overload are important. Safety-critical applications, such as collision avoidance systems and emergency vehicle notifications, suffer from delayed or missed messages due to the sheer volume of irrelevant data. Additionally, the functionality of sensor-sharing systems, which rely on timely and accurate information exchange, is compromised. This inefficiency not only consumes valuable processing resources but also increases the risk of accidents, as vehicles may not receive the urgent alerts they need to operate safely.

Current solutions and standards in V2X communication are inadequate, often leading to operational inefficiencies, higher processing costs and an elevated risk to safety. The inability to distinguish between critical and non-critical messages amounts to resources wasted on processing irrelevant data, further exacerbating the problem.

Within this context, there is a need for an improved solution for managing load during V2X communications.

### SUMMARY

It is therefore provided a method implemented by a Telematic Control Unit (TCU) of a vehicle for managing load during Vehicle-to-Everything (V2X) communications. The TCU is configured for executing one or more processes based on messages received from multiple remote emitters. The TCU comprises a data storage containing dynamic information representing a relation between unique identifiers, each of a respective remote emitter, and a respective filtering duration. The dynamic information enable for each remote emitter a respective forwarding frequency among a predetermined set of non-zero forwarding frequencies, each forwarding frequency being a frequency at which to forward received messages to the one or more processes.

The method comprises receiving messages from multiple remote emitters, the messages being received at a respective receiving frequency for each respective remote emitter.

The method also comprises identifying the unique identifier of the respective remote emitter of each received message.

The method further comprises forwarding received messages to the one or more processes based on the identified unique identifier and on the dynamic information.

The method comprises, for each message among at least one message received from each respective remote emitter, obtaining a set of areas of interest each defined with respect to the vehicle, each area of interest having a nominal forwarding frequency; identifying a location of the respective remote emitter; identifying one or more respective areas of interest containing the identified location; and updating the dynamic information of the data storage to enable an up-to-date value of the forwarding frequency for the respective remote emitter, based on the identified one or more areas of interest.

The method may comprise one or more of the following:
- the obtained set of areas of interest comprises:
   - one or more elongated areas, each elongated in the longitudinal direction of motion of the vehicle, and
   - an additional area which covers a complement of the union of the other or all other areas of the set of areas of interest,
   the nominal forwarding frequency of each elongated area of interest being higher than the nominal forwarding frequency of the additional area;
- the nominal forwarding frequency of the additional area is equal to the lowest forwarding frequency among the predetermined set of non-zero forwarding frequencies;
- the obtained set of areas of interest further comprises:
   - a first area elongated in the longitudinal direction of motion of the vehicle, and
   - a second area elongated in the longitudinal direction of motion of the vehicle, the second area covering a periphery of the first area;
   the nominal forwarding frequency of the first area being higher than the nominal forwarding frequency of the second area;
- the nominal forwarding frequency of the first area is the highest forwarding frequency among the predetermined set of non-zero forwarding frequencies, and/or the nominal forwarding frequency of the second area is an intermediate forwarding frequency among the predetermined set of non-zero forwarding frequencies;
- the obtained set of areas of interest further comprises:
   - an area elongated in the longitudinal direction of motion of the vehicle,
   - a supplementary area which extends in the transversal direction of motion of the vehicle,

   the nominal forwarding frequency of the elongated area being equal to the nominal forwarding frequency of the supplementary area,
   wherein optionally the nominal forwarding frequency of the elongated area and the nominal forwarding frequency of the supplementary area are equal to the highest forwarding frequency among the predetermined set of non-zero forwarding frequencies;
- each elongated area is shaped as an ellipse;
- each area of interest is centered on the location of the vehicle;
- updating the dynamic information of the data storage to enable an up-to-date value is, when the nominal forwarding frequency of the identified one or more areas of interest is not the highest frequency among the predetermined set of non-zero forwarding frequencies, further based on a content of the message;
- updating the dynamic information of the data storage to enable an up-to-date value comprises:
   - determining whether or not the message is a priority message based on the content of the message,
   wherein:
   o if the message is determined not to be a priority message, then the up-to-date value is determined to be the nominal forwarding frequency of the identified one or more areas of interest;
   o else:
      ▪ if the nominal forwarding frequency of the identified one or more areas of interest is the highest forwarding frequency among the predetermined set of non-zero forwarding frequencies, then the up-to-date value is determined to be said highest forwarding frequency;
      ▪ else, the up-to-date value is determined to be an upgraded value of the nominal forwarding frequency of the identified one or more areas of interest;
- the method comprises dynamically computing the set of areas of interest, a size of the areas of interest monotonously increasingly depending on an instantaneous speed and/or direction of the vehicle, wherein optionally the computing of the set of areas of interest is based on a set of Object and Event Detection Response (OEDR) safety recommendations; and/or
- the method comprises evaluating a triggering condition, the identifying and forwarding for received messages from each respective remote emitter, and the obtaining, identifying a location, identifying one or more respective areas of interest, and updating, for each message among at least one message received from each respective remote emitter, being performed as a result of a positive evaluation of the triggering condition;
wherein optionally the triggering condition relates to TCU performance, the triggering condition being for example based on one or more thermal levels and/or on one or more processing levels, and/or the triggering condition relates to V2X channel performance, the triggering condition being for example based on a channel busy ratio and/or on an indication on channel congestion critical levels.

It is further provided a computer program comprising instructions which, when the program is executed by a TCU, cause the TCU to carry out the method.

It is further provided a computer readable storage medium having recorded thereon the computer program.

It is further provided a TCU comprising a processor coupled to a memory, the memory having recorded thereon the computer program.

### BRIEF DESCRIPTION OF THE DRAWINGS

Non-limiting examples will now be described in reference to the accompanying drawings, where:
- FIG. 1 shows a flowchart of an example of the method;
- FIG.s 2 to 6 show an example of implementation of the method; and
- FIG. 7 shows an example of a TCU.

### DETAILED DESCRIPTION

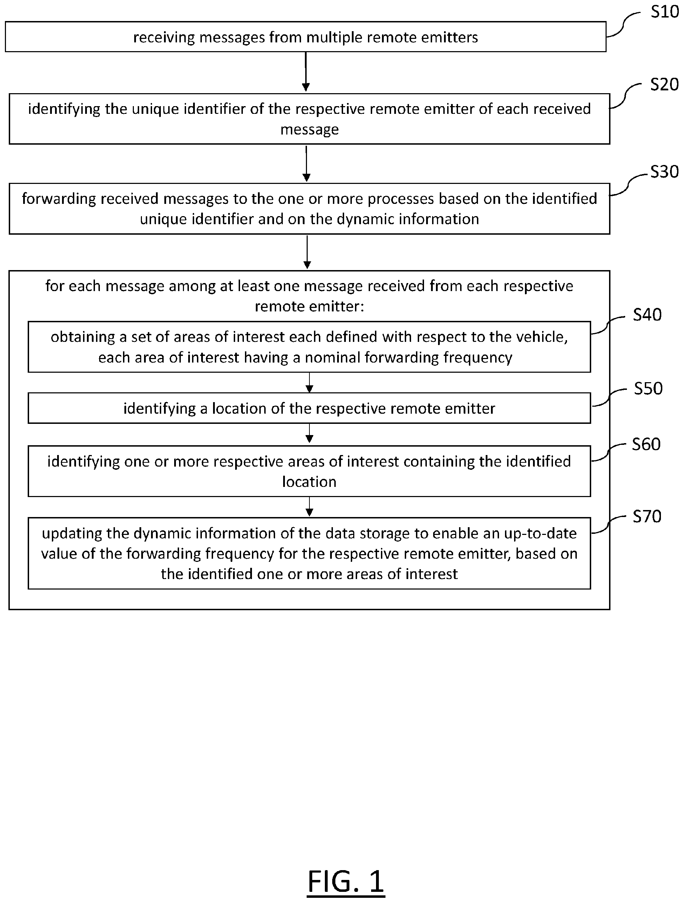

With reference to the flowchart of FIG. 1, it is proposed a method implemented by a Telematic Control Unit (TCU) of a vehicle (referred to as "ego vehicle") for managing load during Vehicle-to-Everything (V2X) communications. The ego vehicle may be in motion (e.g., driving) while the method is implemented. The method may be continuously repeated by the TCU of the ego vehicle, as an uninterrupted process.

The TCU is configured for executing one or more processes (e.g., including at least one driving assistance process, at least one collision avoidance process, and/or at least one emergency notification process) based on messages received from multiple remote emitters (e.g., including multiple vehicles and/or multiple pieces of infrastructure). The set of multiple remote emitters may evolve as the ego vehicle moves, and/or may comprise, at a time, (e.g., all) remote emitters at reach depending on the ego vehicle's position.

The TCU comprises a data storage containing dynamic information.

The dynamic information represent a relation between unique identifiers, each of a respective remote emitter, and a respective filtering duration for each unique identifier. The respective filtering duration is a dynamic value, indicating a remaining time period during which messages received from the respective remote emitter should be filtered out, that is, should be discarded (i.e., not e.g., never - forwarded to the one or more processes), such as deleted or killed. Such filtering relieves the TCU from applying the one or more processes to messages that are received during said time period from the respective remote emitter. The dynamic information may dynamically represent, for each respective filtering duration, the respective filtering duration being, at a first time, a positive value, such that it decreases as time passes, until the respective filtering duration reaches zero at a second time. Each respective filtering duration may thus represent a count-down timer. The dynamic information may dynamically further represent, for each respective filtering duration, at or after the second time, the value of each respective filtering duration being reset to a positive value, such that the filtering of messages received from the respective remote emitter may occur again. During a period where the dynamic information represents a zero value for a respective filtering duration, the filtering of messages received from the respective remote emitter may be disabled, such that messages received from the respective remote emitter may be forwarded to the one or more processes.

Following this principle, the dynamic information enable, for each remote emitter, a respective forwarding frequency among a predetermined set of non-zero forwarding frequencies. In other words, the dynamic information are structured such that they ensure that messages from each remote emitter are forwarded to the one or more process at a respective forwarding frequency among the predetermined set of non-zero forwarding frequencies.

Data in the dynamic information may be structured according to different embodiments.

In a first embodiment, the dynamic information may (directly) contain a list of unique identifiers, each of a respective remote emitter, and the respective filtering duration (e.g., a dynamic value of a count-down timer) associated to each unique identifier. In other words, the dynamic information may contain a list of unique identifiers and the associated count-down timers, whose starting values depend on (i.e., is a function of, is in relation with) the respective forwarding frequency. Not all unique identifiers need be listed in the dynamic information. If a remoter emitter has a unique identifier not listed in the dynamic information, it may be considered that it corresponds to a zero filtering duration, that is, messages from the remoter emitter are not discarded and further considered by the method.

In the first embodiment, upon (the value of the count-down timer of) a respective filtering duration reaching zero, the respective unique identifier may dynamically be deleted from the dynamic information (such that messages received from the respective remote emitter be not discarded anymore). At times (and as discussed later), new identifiers, each associated with a respective filtering duration, may dynamically be added to the dynamic information (including for example identifiers previously deleted from the list).

In a second embodiment, the dynamic information may contain a list of unique identifiers, each of a respective remote emitter. Each unique identifier is associated (in the dynamic information) with a respective forwarding frequency among a predetermined set of (different) non-zero forwarding frequencies. The dynamic information may thus enable unique identifiers associated with different values of the predetermined set of non-zero forwarding frequencies, i.e., with different non-zero forwarding frequencies. Each forwarding frequency may correspond to a percentage or fraction of a receiving frequency, and may optionally be specified (in the dynamic information) merely by a percentage value or a fraction value. Thus, the dynamic information may further include a piece of data specifying the respective forwarding frequency of each unique identifier, such as a percentage or fraction value (to be then multiplied with a value of the receiving frequency, in such case).

In the second embodiment, the dynamic information may further contain, associated to each unique identifier, an additional value indicative of a previous time at which a message from the unique identifier was forwarded to the one or more processes (thus, not filtered out), such as a timestamp or a dynamic time lapse (count-up timer or clock). Together with the respective forwarding frequency, the additional value represents the respective filtering duration for each unique identifier.

In the second embodiment, unique identifiers may be dynamically deleted from the dynamic information after a certain time (e.g., when it is allowed for the respective remote emitter to be forgotten, for example because the ego vehicle is deemed to have moved far way) and/or may be dynamically added to the dynamic information (e.g., when the respective remote emitter is encountered for the first time, or re-encountered after it had been "forgotten" at a previous time).

Each forwarding frequency is a frequency at which to forward received messages to the one or more processes.

As shall be described, for each unique identifier and, thus, for each remote emitter (e.g., connected vehicle, pedestrian or piece of infrastructure), the value of the forwarding frequency, enabled by the dynamic information, may depend on a (e.g., current and/or previous) position of the remote emitter with respect to a set of areas of interest, and optionally further based on a content of messages received from the remote emitter (e.g., event flag, vehicle type, or any other piece of content). This allows to prioritize -e.g., by updating the filtering duration represented by the dynamic information-- messages from areas of higher interest, and optionally messages containing critical event notifications.

As the dynamic information are allowed to evolve as the ego vehicle moves (e.g., is driving), and as remote emitters repeatedly send their messages at a given frequency and may themselves -for at least part of them- be moving (e.g., is driving), remote emitters may have their unique identifiers dynamically related with or associated with lower or higher forwarding frequency, depending on the location of the remote emitters relative to the areas of higher interest, and optionally on whether messages from the remote emitters contain critical event notifications. The solution thus ensures timely response to safety-critical or potentially safety-critical information.

For example, the solution may prioritize or upgrade priority ranking of messages A from remote emitters that are located both close from the ego vehicle (i.e., the vehicle) and in an area of interest elongated in the direction of motion of the ego vehicle, messages B from remote emitters that are located both close from the ego vehicle and in an area of interest elongated in the ego vehicle's lateral direction of motion (that is, a direction perpendicular to the direction of motion of the ego vehicle), and/or messages C detected to contain safety-critical information. Messages A may indeed be presumed to be of relatively high priority, as they may stem from emitters encountered on the same road as the ego vehicle. Messages B may also be presumed to be of relatively high priority, as they may stem from emitters coming from crossroads. Messages C may be presumed to be of relatively high priority due to their content.

For that, the method comprises receiving S10 messages from multiple remote emitters. The messages are received at a respective receiving frequency for each respective remote emitter. In examples, the respective receiving frequency may also be the same for all remote emitters, e.g., 10Hz, e.g., a message being received every 0.1 second.

The respective receiving frequency may be higher or equal than each of the forwarding frequencies of the predetermined set of several non-zero forwarding frequencies, for example comprising or consisting of at least two (e.g., all of): the receiving frequency (e.g., 10Hz), a first frequency (e.g., 1Hz) lower than the receiving frequency, and a second frequency (e.g., 0.3Hz) lower than the first frequency.

The dynamic information allow messages from each remote emitter to be forwarded to the one or more processes. For each remote emitter, the dynamic information enable a respective forwarding frequency among a predetermined set of non-zero forwarding frequencies. In the first embodiment, the respective filtering duration associated to each unique identifier may be a dynamic value of a count-down timer. The starting value of the count-down timer may depend on the forwarding frequency enabled by the dynamic information. For example, if the forwarding frequency is equal to the receiving frequency (e.g., 10Hz), the starting value of the count-down timer may be set to 0.1 second, meaning that the respective unique identifier will be present (e.g., stored) in the dynamic information for 0.1 second; if the forwarding frequency is equal to the first frequency (e.g., 1Hz), the starting value of the count-down timer may be set to 1 second, meaning that the respective unique identifier will be present (e.g., stored) in the dynamic information for 1 second; if the forwarding frequency is equal to the second frequency (e.g., 0.3Hz), the starting value of the count-down timer may be set to 3.3 seconds, meaning that the respective unique identifier will be present (e.g., stored) in the dynamic information for 3.3 seconds.

In the second embodiment, the respective filtering duration may be represented by a respective forwarding frequency and further by an additional value. The additional value may be a timestamp indicating the previous time at which a message from the unique identifier was forwarded to the one or more processes. The additional value (e.g., a timestamp or a time lapse timer) allows that the respective forwarding frequency is achieved for the respective remote emitter. The respective forwarding frequency may allow a percentage of received messages being forwarded. For example, if the forwarding frequency is equal to the receiving frequency (e.g., 10Hz), the rate of forwarded messages is 100%, meaning that all messages received from the respective remote emitter will be forwarded to the one or more processes; if the forwarding frequency is equal to the first frequency (e.g., 1Hz), the rate of forwarded messages is 10%, meaning that 10% of the messages received from the respective remote emitter will be forwarded to the one or more processes; if the forwarding frequency is equal to the second frequency (e.g., 0.3Hz), the rate of forwarded messages is 3.3%, meaning that 3.3% of the messages received from the respective remote emitter will be forwarded to the one or more processes.

The method comprises a first processing block S20-S30 that aims at forwarding the messages received at S10 at an appropriate forwarding frequency.

For that purpose, the method also comprises identifying S20 the unique identifier of the respective remote emitter of each received message, and forwarding S30 received messages to the one or more processes based on the identified unique identifier and on the dynamic information. The dynamic information enable the appropriate forwarding frequency to be achieved, over a series of messages received from a respective remote emitter, and as the ego vehicle and/or the respective remote emitter moves.

The messages received at S10 from multiple remote emitters may comprise messages emitted by remote emitters not having yet the respective unique identifiers in relation to or associated with the respective forwarding frequencies in the dynamic information of the data storage. In other words, the ego vehicle may encounter a new remote emitter (e.g., while the ego vehicle and/or the new remote emitter are in motion, driving), and said new emitter may be unknown and thus not have its unique identifier in the dynamic information of the data storage, at the beginning.

In the first embodiment, if the identified unique identifier is in the dynamic information (i.e., the filtering duration is non null and non-zero), then the received message is not further considered by the method (e.g., the received message is discarded or erased/killed); else, the method forwards the received message to the one or more processes based on the identified unique identifier and on the dynamic information. This embodiment is particularly efficient in optimizing computation resource, as the respective forwarding frequency is reached from the beginning for each remote emitter, and messages from each remote emitter are minimally processed when to be erased (e.g., due to the respective forwarding frequency not being 100% of the receiving frequency).

In the second embodiment, if the identified unique identifier is in the dynamic information (i.e., each unique identifier being associated with a respective forwarding frequency), then the received message is further considered by the method and forwarded to the one or more processes based on the identified unique identifier and on the dynamic information; else, the method may comprise inserting the unique identifier of the new remote emitter in the dynamic information of the data storage when receiving a first message from the new remote emitter, and further processing the first message of the new remote emitter with steps S40-S70 (discussed below) to obtain an up-to-date value of the forwarding frequency, and using such obtained up-to-date value of the forwarding frequency. Thanks to S70, the respective forwarding frequency will be available for subsequent messages received from the new remote emitter. Still in the second embodiment, alternatively, the method may comprise inserting the unique identifier of the new remote emitter in the dynamic information of the data storage when receiving the first message from the new remote emitter, and associating the highest forwarding frequency among the predetermined set of non-zero forwarding frequencies.

The method comprises, after or aside the first processing block S20-S30, a second processing block S40-S70 that aims at appropriately updating the dynamic information of the data storage, such that the first processing block S20-S30 can effectively forward the messages at the appropriate forwarding frequency. The second processing block S40-S70 is represented on FIG. 1 after the first processing block S20-S30, but it may in fact executed independently and in parallel (notably in the second embodiment), both blocks being repeated each as a continuous process. For each remote emitter, the second processing block S40-S70 may be performed for each message among at least one message received from the remote emitter that have not been discarded yet by the method.

For that purpose, the method further comprises, for each message among at least one message received (e.g., each received message not discarded yet) from each respective remote emitter, obtaining S40 a set of areas of interest each defined with respect to the vehicle (i.e., the ego vehicle). Each area of interest has (i.e., is associated with) a nominal forwarding frequency (i.e., a value of frequency at which to forward messages received from said area of interest to the one or more processes, in a normal/regular/standard/default situation, aka "nominal" situation). Each forwarding frequency of the predetermined set of non-zero forwarding frequencies may be the nominal forwarding frequency of at least one area of interest. In examples, each pair of areas of interest having distinct nominal forwarding frequencies may be disjoint (e.g., spatially disjoint, thus with no common spatial intersection).

The method furthermore comprises, for each message among at least one message received (e.g., each received message not discarded yet) from each respective remote emitter, identifying S50 a location of the respective remote emitter and identifying S60 one or more respective areas of interest containing the identified location. The method thus seeks to determine the forwarding frequency in relation with the unique identifier of the respective remote emitter in the dynamic information based on the location of the respective remote emitter and on a corresponding nominal forwarding frequency of the one or more areas of interest.

In examples, in the case each pair of areas of interest having distinct nominal forwarding frequencies are disjoint, the identified one or more respective areas of interest containing the identified location may be any area of interest containing the identified location (because, in this case, if several areas of interest contain the identified location, they will all have the same nominal forwarding frequency). Otherwise, i.e., in the case the pair of areas of interest having distinct nominal forwarding frequencies are overlapped, the identified one or more respective areas of interest containing the identified location may be the area of interest having the highest nominal forwarding frequency.

The method moreover comprises, for each message among at least one message received (e.g., each received message not discarded yet) from each respective remote emitter, updating S70 the dynamic information of the data storage to enable an up-to-date value of the forwarding frequency for the respective remote emitter, based on the identified one or more areas of interest. In other words the second block ensures that the dynamic information is, after the updating S70, such that it ensures that messages from the respective emitter be forwarded to the one or more processes at the up-to-date value of the appropriate forwarding frequency. The updating S70, being based on the identified one or more areas of interest, may sometimes consist in doing nothing, when the dynamic information is already such that the up-to-date value is enabled (that is, when the current value enabled by the dynamic information is already equal to the up-to-date value, e.g., which may be determined during S70).

In the first embodiment, the updating S70 thus results in that the dynamic information represent an updated relation between the unique identifier of the respective remote emitter and the respective filtering duration. The updating S70 may comprise initializing (e.g., resetting) the starting value of the count-down timer depending on the up-to-date value of the forwarding frequency. For example, if the updating of the dynamic information enables an up-to-date value of the forwarding frequency equal to 10Hz, then the updating S70 may comprise adding the respective unique identifier and setting the starting value of the count-down timer to 0.1 second. This means that messages received from the respective remote emitter by the ego-vehicle during the next 0.1 second will be discarded and not forwarded to the one or more processes.

In the second embodiment, the updating S70 thus results in that the dynamic information has the up-to-date value related to the unique identifier. The updating S70 may comprise systematically writing the up-to-date value over the currently stored value, even if the currently stored value is already equal to the up-to-date value. Alternatively, the updating S70, after comparing the up-to-date value with the currently stored value, may determine whether an update of the value via overwriting is required or not.

Such a method allows micro-fencing and thereby forms an improved solution for managing load during V2X communications.

Notably, the method amounts to an improved micro-fencing approach featuring a dynamic message filtration and prioritization system specifically designed for V2X communication networks. The method dynamically filters and prioritizes V2X messages based on the remote emitter's spatial location within dynamically defined areas of interest and optionally on the contextual relevance of the messages. Messages deemed non-critical to safety are less frequently included in processing, thereby optimizing resource allocation. By focusing on high-priority safety-related V2X communications, therefore optimizing the number of messages to be processed, the method significantly enhances the overall performance of the TCU and improves sensor-sharing efficiency in the V2X environment.

The method features a data storage containing dynamic information that represent a relation between unique identifiers, each of a respective remote emitter, and a respective filtering duration. Such a relation allows a filtering mechanism, as the method does not further consider forwarding messages, received from remote emitters to the one or more processes, based on the identified unique identifiers and on the dynamic information.

In the first embodiment, the relation allows the presence of unique identifiers in the dynamic information for a time interval equal to the respective filtering duration (e.g., implemented by a count-down timer). In other words, each unique identifiers remains in the dynamic information till the expiration of the respective filtering duration. Messages received from remote emitters whose unique identifiers are not in the dynamic information are (directly) forwarded to the one or more processes.

In the second embodiment, the relation allows unique identifiers in the dynamic information to be associated with a respective forwarding frequency. Messages received from remote emitters whose unique identifiers are in the dynamic information are forwarded, according to the respective forwarding frequency and the respective additional value, to the one or more processes.

The method further features non-zero forwarding frequencies that guarantee an always-aware mode, i.e., ensuring that even currently non-relevant areas are not completely excluded from the monitoring. Such a feature contributes to increase safety of the ego vehicle, while optimizing the load of V2X communications in a wide range of situations (e.g., the ego vehicle being on a highway, urban streets, or any other road). The number of the non-zero forwarding frequencies may be at least two. It is noteworthy that a number of non-zero forwarding frequencies bigger than two enables a finer classification of the levels of priority. Indeed, with two non-zero forwarding frequencies is possible to classify only high relevant and less relevant messages. With three non-zero forwarding frequencies is possible to introduce an intermediate level of relevance (or an intermediate level of priority). Thus, the higher the number of non-zero forwarding frequencies is, the better and finer the classification of the levels of priority is.

In an example according to the first embodiment, the dynamic information contains a dynamic list of identifiers, and for each identifier, a dynamic value of a count-down timer. The method includes receiving S10 messages from multiple remote emitters. The messages may optionally be received at the same receiving frequency for all remote emitters (e.g., 10Hz). The method further includes identifying S20, e.g., real-time (e.g., in less than 100ms or 50ms or 10ms after reception S10) the unique identifier of the respective remote emitter of each received message. The method further includes verifying, e.g., real-time (e.g., in less than 100ms or 50ms or 10ms after reception S10), in the dynamic information, whether the unique identified is listed or not. If the unique identifier is listed, the method comprises discarding the message, and for example kills/deletes the message which is thus not further processed at all. If the unique identifier is not listed, the method comprises forwarding S30 the received message to the one or more processes.

In parallel to or before or after such forwarding S30, e.g., independently, the method comprises, for each message received at S30 and not discarded (e.g., killed), performing the second processing block S40-S70 on the message (in order to potentially update the dynamic information with respect to the respective unique identifier contained in the message). Namely, the method comprises performing the obtaining S40, the identifying S50, and the identifying S60, as explained earlier. Each nominal forwarding frequency has a corresponding starting value of the filtering duration, which may be equal to the inverse of the nominal forwarding frequency. The set of areas of interest comprises at least two areas of interest having distinct values of the nominal forwarding frequency.

Then, the method may comprise testing if the nominal forwarding frequency of the identified one or more areas of interest is the highest forwarding frequency among the predetermined set of non-zero forwarding frequencies. If so, then the method does nothing. Else, if the nominal forwarding frequency of the identified one or more areas of interest is not the highest forwarding frequency among the predetermined set of non-zero forwarding frequencies, then the method comprises updating S70 an up-to-date value of the forwarding frequency for the respective remote emitter, based on the identified one or more areas of interest and further based on a content of the message.

Optionally, the method may further comprise determining whether or not the message is a priority message based on the content of the message.

In case the method comprises such option, if the message is determined not to be a priority message, then the method adds the respective unique identifier to the dynamic information and sets the value of the related count-down timer to the starting value of the filtering duration corresponding to the nominal forwarding frequency of the identified one or more areas of interest.

Else, if the message is determined to be a priority message and if the nominal forwarding frequency of the identified one or more areas of interest is the highest forwarding frequency among the predetermined set of non-zero forwarding frequencies, then the method adds the respective unique identifier to the dynamic information and sets the value of the related count-down timer to the starting value of the filtering duration corresponding to said highest forwarding frequency.

Otherwise, if the message is determined to be a priority message and if the nominal forwarding frequency of the identified one or more areas of interest is not the highest forwarding frequency among the predetermined set of non-zero forwarding frequencies, then the method adds the respective unique identifier to the dynamic information and sets the value of the related count-down timer to the starting value of the filtering duration corresponding to an upgraded (e.g., the higher or consecutive) value of the nominal forwarding frequency of the identified one or more areas of interest.

As a result, the dynamic information is set with a list of unique identifiers each having a value of the filtering duration, which will ensure that filtering will occur during an upcoming period so as to achieve the desired frequencies.

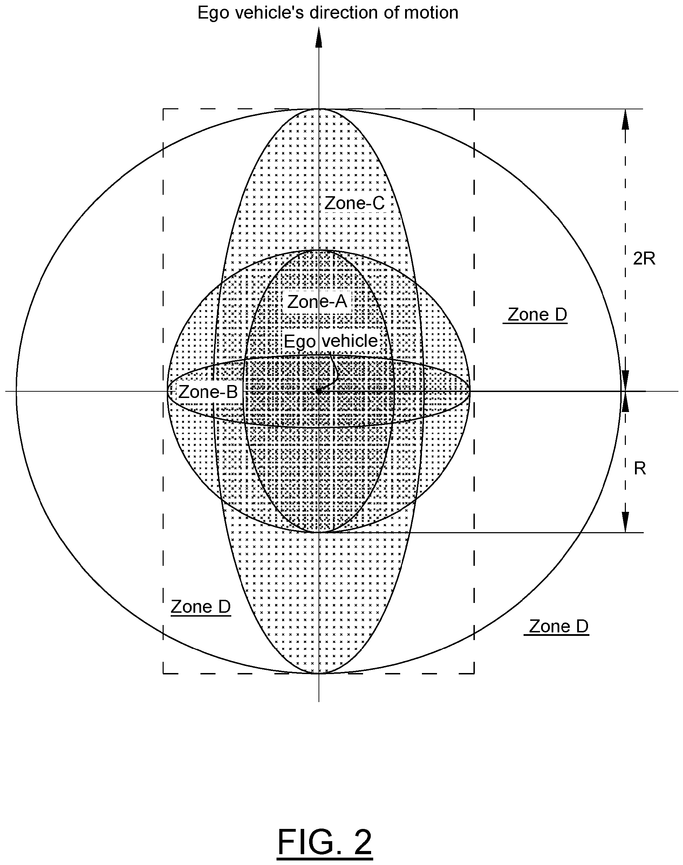

With reference to FIG. 2, the set of areas of interest obtained at S40 may comprise one or more elongated areas A and C, each elongated in the longitudinal direction of motion of the vehicle. FIG. 2 shows an example of one or more elongated areas in the longitudinal direction of motion of the vehicle: a first area, Zone A, elongated in the longitudinal direction of motion of the vehicle, and a second area, Zone C, also elongated in the longitudinal direction of motion of the vehicle. As shown on the figure, Zone C covers (i.e., contains) a periphery of the first area of interest (i.e., a zone surrounding Zone A). Depending on the implementation, Zone C may be computed as the union between Zone A and said periphery (thus containing Zone A), or alternatively as consisting of said periphery only (thus disjoint from Zone A). This is a mere matter of implementation. The nominal frequency of the first area (Zone A) may be higher than the nominal forwarding frequency of the second area (Zone C), as emitters located in Zone A may be presumed to be of higher priority (in terms of the importance to be given to messages received from them) that those located in Zone C only (i.e. located in the periphery of Zone A which is contained in Zone C). In examples, the nominal forwarding frequency of the first area (Zone A) may be, e.g., 10 Hz, e.g., a message forwarded (to one or more processes) every 0.1 seconds, whereas the nominal forwarding frequency of the second area (Zone C) may be e.g., 1 Hz or 10% of the nominal forwarding frequency of the first area, e.g., a message forwarded (to one or more processes) every second. Hence, messages received from Zone A are deemed more important (e.g., safety-critical) with respect to messages received from Zone C.

In one example, the second area, Zone C, may be disjoint from the first area, Zone A, i.e., Zone C is the area exclusively outside the first area, zone A, (e.g., outside any other area having a distinct respective nominal forwarding frequency). Thus, the identified one or more respective areas of interest containing the identified location may be unambiguously identified with Zone C (resp., Zone A), if the identified location of the respective remote emitter is located in Zone C (resp., Zone A). In another example, the second area, Zone C, may contain the first area, Zone A, i.e., Zone C partially overlaps with the first area, zone A. In this case, the identified one or more respective areas of interest containing the identified location may be unambiguously identified with the area of interest having the highest nominal forwarding frequency.

Still with reference to FIG. 2, the set of areas of interest obtained at S40 may comprise a supplementary area (Zone B) which extends in the transversal direction of the motion of the vehicle. The supplementary area, therefore, contributes to extend the area of interest in the transversal direction of motion, thus enhancing safety in situations such as urban streets and crossroads, where covering the ego vehicle's lateral direction of motion is paramount. The nominal forwarding frequency of the first area, Zone A, elongated in the longitudinal direction of motion of the vehicle may be equal to the nominal forwarding frequency of the supplementary area. Optionally, the nominal forwarding frequency of the first area, Zone A, and the nominal forwarding frequency of the supplementary area (Zone B) may be equal to the highest forwarding frequency (e.g., 10 Hz) among the predetermined set of non-zero forwarding frequencies.

Still with reference to FIG. 2, the set of areas of interest obtained at S40 may comprise an additional area, Zone D, which covers a complement (i.e., the surroundings) of the union of the other or all other areas of the set of areas of interest. In other words, Zone D corresponds to everywhere else from Zone A or Zone B or Zone C. The nominal forwarding frequency of the additional area may be equal to the lowest forwarding frequency (e.g., 0.3 Hz or 3.3% of the nominal forwarding frequency of the first area) among the predetermined non-zero forwarding frequencies. Messages received from outside the main areas of interest A, B and C, thus from relatively far from the vehicle or not from a direction of motion or a transverse direction, may indeed be considered of lesser importance.

In examples, each elongated area (e.g., Zone A and Zone C) may be shaped as an ellipse. The supplemented area (Zone B) may also be shaped as an ellipse but elongated in the transversal direction of motion of the vehicle. The shape of an ellipse may easily capture safety-critical and potentially safety-critical messages identified in the longitudinal and/or transversal directions of motion of the vehicle. The shape of an ellipse also allows simple computations to locate a remote emitter relative to the areas of interest. Each area of interest may be centered on the location of the ego vehicle, as shown on FIG. 2.

Still with reference to FIG. 2, two circles are used to define the high priority circle of radius *R* and a low priority circle of radius *2R.* The first area (Zone A) is an ellipse of major axis *a*₁ = *R* and minor axis *b*₁ = *R*/2. The second area (Zone C) is an ellipse of major axis *a*₃ = *2R* and minor axis *b*₃ = 7*R*/10. Both Zone A and Zone C are elongated in the longitudinal direction of motion of the vehicle and share the same orientation of their major axes. The supplementary area (Zone B) is an ellipse of major axis *a*₂ = *R* and minor axis *b*₂ = *R*/4 or *b*₂ = 3*R*/20. Zone B extends in the transversal direction of motion of the vehicle, covering the vehicle's lateral area. The additional area which covers the complement (Zone D) of the union of Zone A, Zone B and Zone C may be referred to as an out-of-interest area.

Zone B is perpendicular to Zone A and Zone C, i.e., the major axis of the ellipses of the Zone B is perpendicular to the major axes of the ellipses of the Zone A and Zone C. All the ellipses and circles share a common central point that is identified with the location of the ego vehicle.

The use of ellipses, contrary to the use of circles, amounts to reducing the area to be monitored, thus saving resources of the TCU. For example, for a Zone A with major axis *a*₁ = *R* and minor axis *b*₁ = *R*/2 and Zone B major axis *a*₂ = *R* and minor axis *b*₂ = *R*/4, the reduced area covered by the union of Zone A and Zone B is 37% less than the area covered by the circle of radius *R.*

The obtaining S40 of the set of areas of interest may comprise dynamically computing such set of areas of interest (in a referential frame centered on the ego vehicle), the geometry of the set of areas of interest (in the referential frame centered on the ego vehicle) thus dynamically changing. For example, the size of the areas of interest may monotonically increasingly depend on an instantaneous speed and/or direction of the ego-vehicle. In examples, the axes of each ellipse may be proportional to the instantaneous speed of the vehicle. The higher the instantaneous speed of the vehicle is, the bigger the size of the area of interest is. Furthermore, the dynamically computing of the set of areas of interest may optionally be based on (i.e. have been configured based on) a set of Object and Event Detection Response (OEDR) safety recommendations.

The updating S70 the dynamic information of the data storage to enable an up-to-date value may be further based on a content of the message (e.g., event flag, vehicle type, or any other piece of content) when the nominal forwarding frequency of the identified one or more areas of interest is not the highest frequency among the predetermined set of non-zero forwarding frequencies. When the nominal forwarding frequency of the one or more areas of interest identified at S60 is the highest frequency among the predetermined set of non-zero forwarding frequencies, updating S70 the up-to-date value may be exclusively based on said one or more areas of interest identified at S60. In other words, the up-to-date value may necessarily be set to said highest frequency. However, when this is not the case, the method may optionally comprise basing the updating S70 on additional information, in specific the content of the message, to potentially determine an up-to-date value different from the reference value that would be determined exclusively based on said one or more areas of interest identified at S60 (such as the highest nominal forwarding frequency among said one or more areas of interest). Optionally, the content of the message may serve only to potentially upgrade the reference value, but never to downgrade the reference value. Such a feature amounts to filter and prioritize messages received from lower priority zones (e.g., Zone C or Zone D) that may require to be closely monitored because they are potentially safety-critical messages coming from, for example, priority vehicle types (e.g., an ambulance, a police car, or any other vehicle) and/or labelled by an event flag (e.g., a traffic light).

The updating S70 of the dynamic information of the data storage to enable an up-to-date value may comprise determining whether or not the message is a priority message based on the content of the message.

The updating S70 of the dynamic information of the data storage to enable an up-to-date value may comprise an algorithm configured to determine whether or not the message is a priority message. If the message is determined not to be a priority message, then the up-to-date value may be determined to be the nominal forwarding frequency of the identified one or more areas of interest. Else, i.e., if instead the message is determined to be a priority message, the algorithm may check the following two cases: i) if the nominal forwarding frequency of the identified one or more areas of interest is the highest forwarding frequency among the predetermined set of non-zero forwarding frequencies, then the up-to-date value is determined to be said highest forwarding frequency; ii) else, the up-to-date value is determined to be an upgraded value (e.g., the value for the forwarding frequency associated with the unique identifier of the respective remote emitter in the dynamic information of the data storage is increased to the consecutive and higher value) of the nominal forwarding frequency of the identified one or more areas of interest.

The method may further comprise evaluating a triggering condition. The positive evaluation of the triggering condition may initiate, for each received message from each respective remote emitter, the identifying S20 and the forwarding S30 and, for each message among at least one message received from each respective remote emitter, the obtaining S40, the identifying S50 a location, the identifying S60 one or more respective areas of interest, and the updating S70. Optionally, the triggering condition may relate to the TCU performances. For example, the triggering condition may be based on one or more thermal levels and/or one or more processing levels. Additionally or alternatively, the triggering condition may relate to V2X channel performances. For example, the triggering conditions may be based on a channel busy ratio and/or an indication on critical levels of channel congestion.

The method is implemented on a TCU. This means that steps (or substantially all the steps) of the method are executed by at least one computing unit, or any system alike. A typical example of implementation of a method is to perform the method with a TCU adapted for this purpose. The TCU may comprise a processor coupled to a memory, the memory having recorded thereon a computer program comprising instructions for performing the method. The memory may also store a database for saving GPS values. The memory is any hardware adapted for such storage, possibly comprising several physical distinct parts (e.g. one for the program, and possibly one for the database).

The TCU may further comprise or (so as to form a broader system) be coupled to a battery for alimentation, a satellite navigation (GNSS) unit which keeps track of the latitude and longitude values of the position (location) of the ego vehicle, an external interface for mobile communications (e.g., a GSM, GPRS, Wi-Fi, LTE or 5G antenna) which provides the tracked values to a centralized database server storing geographical information, and a mobile communication unit to be connected to a network.

An example of implementation of the method is now discussed.

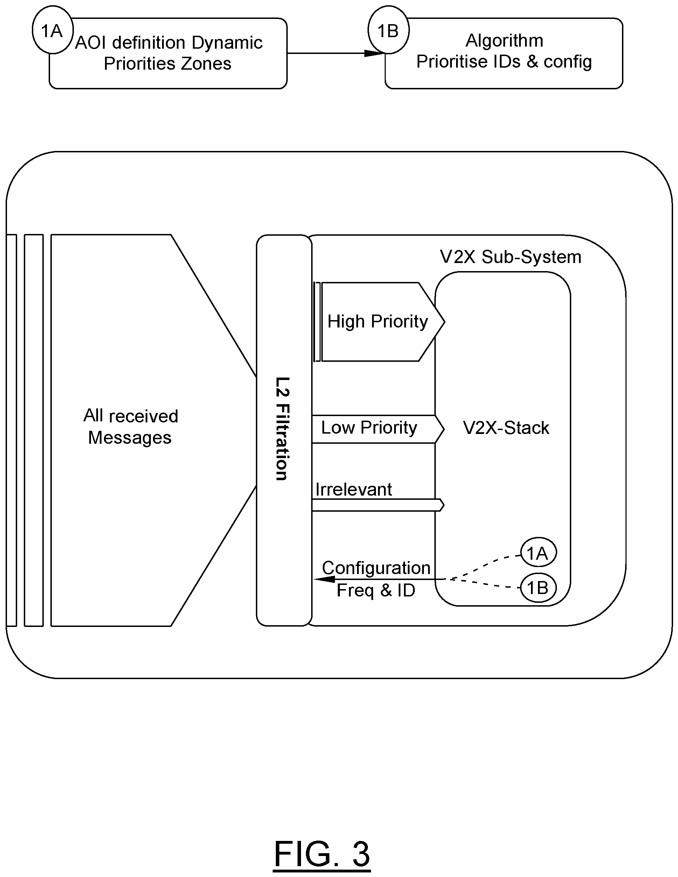

With reference to FIG. 3, the method, according to the example implemented by the TCU, employs an advanced L2 filtration masking mechanism coupled with a decision-making algorithm to implement Contextual-Based Prioritization (CBP) in the V2X-Stack. Generally, a CBP algorithm involves making decisions about which messages (or data) to prioritize based on which location they are emitted as well as the specific context of the driving environment and the needs of the vehicles or infrastructures involved.

This method, according to the example, dynamically prioritizes and filters V2X messages based on the remote emitter's spatial location within a dynamically defined area of interest and optionally on their contextual relevance based on the content of the messages, thus optimizing the resources allocation of the TCU. By focusing on high-priority safety-related communications, this method significantly enhances the overall performance of the TCU and improves sensor-sharing efficiency in the V2X environment.

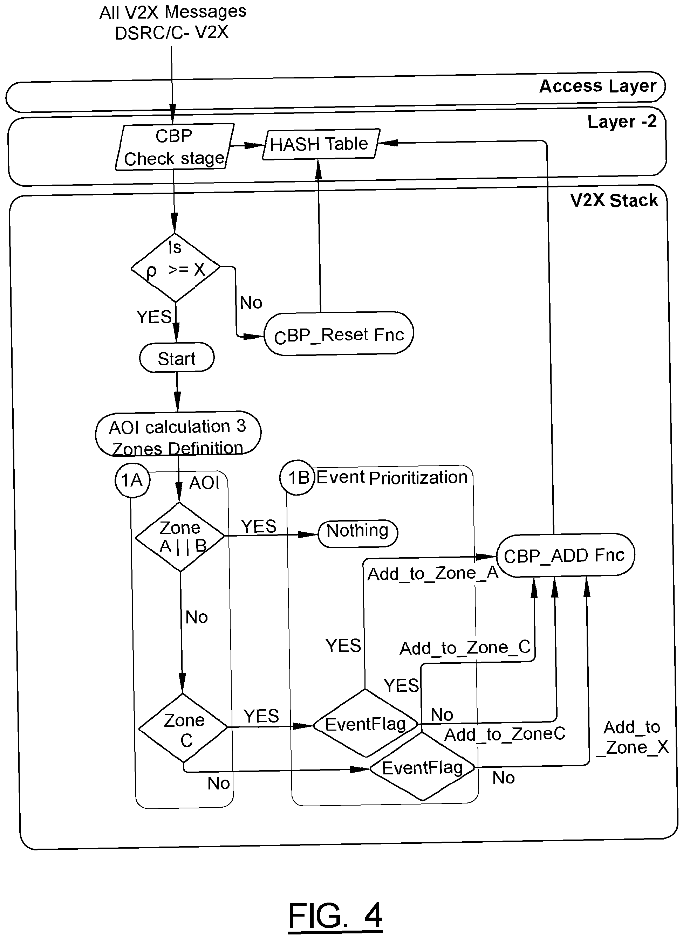

With reference to FIG. 4, all received V2X messages may be received at a respective receiving frequency from each remote emitter, for example 10Hz. The respective receiving frequency may be higher than or equal to each of the forwarding frequencies of the predetermined set of several non-zero forwarding frequencies, for example comprising or consisting of at least two (e.g., all of): the receiving frequency (e.g., 10Hz), a first frequency (e.g., 1Hz) lower than the receiving frequency, and a second frequency (e.g., 0.3Hz) lower than the first frequency. This means that some received messages are not forwarded to the one or more processes. The messages not forwarded may be discarded (e.g., erased). The respective receiving frequency may also be the same for all remote emitters. For example, all remote emitters send messages every 0.1 seconds, i.e., the TCU receives messages at a standard frequency of 10 Hz from each respective remote emitter.

Upon receiving S10 messages from multiple remote emitters entering the Access Layer, the L2 filtration masking mechanism may comprises implementing S20 to S30, for each received message from each respective remote emitter. The L2 filtration masking mechanism may occur in the Layer-2, wherein a CBP check stage and a data storage containing dynamic information (e.g., an hash table) are stored. The L2 filtration masking mechanism reduces the load on the vehicle's TCU, thus minimizing the number of messages that need handling/decoding or processing, thereby optimizing overall system performance.

Each received message may contain information such as a content, the unique identifier and the location of the remote emitter, and additional information characterizing the message as a priority message, such as an event flag and/or a vehicle type.

The predetermined set of non-zero forwarding frequencies may comprise or consist of three non-zero forwarding frequencies. For the sake of concreteness, the three non-zero forwarding frequencies may correspond to messages being of high priority (e.g., safety-critical message), of low (or intermediate) priority, and less relevant. The respective forwarding frequency of a high priority message may be equal to the receiving frequency, e.g., 10 Hz. The respective forwarding frequency of low priority message may be 10% of the respective forwarding frequency of the high priority message, e.g., 1 Hz. The respective forwarding frequency of less relevant messages may be 3.3% of the respective forwarding frequency of the high priority message, e.g., 0.3 Hz. The non-zero forwarding frequencies guarantee that even currently less relevant messages are not completely excluded from the monitoring. The predetermined set of non-zero forwarding frequencies may be adjusted according to the situation in which the V2X communications happen, such as along a highway, a countryside road, an urban road or through crossroads.

The dynamic information in the data storage may comprise a list of unique identifiers each of a respective remote emitter (e.g., a vehicle and/or an infrastructure such as a traffic light).

An example of implementation of the method in the first embodiment is now discussed.

In the first embodiment, the dynamic information may contain, for each unique identifier, a respective filtering duration. The respective filtering duration may be a count-down timer that counts for how long in time the respective unique identifier is present in the dynamic information. For each remote emitter, the method comprises identifying S20 the unique identifier of the remote emitter of each received message. If the unique identifier is present in the dynamic information at the time of the reception of the received message, then the method may comprise discarding the received message. Else, i.e., the unique identifier is not present in the dynamic information at the time of the reception of the received message, then the method comprises forwarding S30 the received message to the one or more processes based on the identified unique identifier and on the dynamic information.

The one or more processes may be implemented in a V2X Stack. The V2X-Stack may contain the one or more processes where the forwarded messages are sent after the L2 filtration, each of the one or more processes may be implemented by a specific algorithm. FIG. 4 shows an example of implementation of a CBP decision-making algorithm for updating the dynamic information of the data storage.

Still with reference to FIG. 4, the method may comprise an algorithm to evaluate certain triggering conditions before starting the CBP decision-making algorithm in the V2X-Stack for updating S70 the dynamic information of the data storage to enable an up-to-date value of the forwarding frequency (i.e., of the level priority) associated with the unique identifier of the respective remote emitter. The updating S70 may be based on the identified one or more areas of interest containing the identified location of the respective remote emitter and may be further based on the content of the message. A triggering condition may be represented by conditions of the type *"ρ* ≥ *X",* where *ρ* may represent a variable on which the triggering condition is applied and *X* may be a metric of choice, a channel congestion level or a TCU performance-based level. Optionally, the triggering condition may relate to the TCU performances. For example, the triggering condition may be based on one or more thermal levels and/or one or more processing levels, and/or V2X channel performances. In examples, the triggering condition may be based on a channel busy ratio and/or an indication on critical levels (e.g., 80%) of channel congestion. The triggering conditions may not be satisfied. In this case, a function (e.g., CBP_Reset Function) may reset the dynamic information, e.g., erasing all the unique identifiers previously stored in the hash table located in the Layer 2, e.g., setting to zero all the filtering durations.

In case the triggering conditions are met, the CBP decision-making algorithm starts the localization-based indexing (block 1A) comprising S40-S60 followed by the event prioritization (block 1B) comprising S70.

The obtaining S40 a set of areas of interest may comprise Zone A and Zone B having the same nominal forwarding frequency that is equal to the highest nominal forwarding frequency among the predetermined set of non-zero forwarding frequencies. In other words, Zone A and Zone B are high priority zones. The obtaining S40 a set of areas of interest may also comprise Zone C having a respective nominal forwarding frequency equal to the low (or intermediate) priority forwarding frequency. The obtaining S40 may further comprise the area covering the complement (e.g., the surroundings) of the union of Zone A, Zone B and Zone C, named Zone D, having nominal forwarding frequency equal to the lowest nominal forwarding frequency among the predetermined set of non-zero forwarding frequencies.

For each message being forwarded to the one or more processes, the method comprises identifying S50 a location of the respective remote emitter and identifying S60 one or more respective areas of interest containing the identified location. The identifying S50 of the location of the respective remote emitter may comprise GPS coordinates included in the received message from the remote emitter.

The updating S70 of the up-to-date value is (firstly and primarily) based on the identified one or more areas of interest and (secondly or additionally or optionally) may be based on the content of the message, e.g., the message may contain an event flag, additional information about the vehicle type (e.g., an ambulance, a police car) or information about an infrastructure (e.g., a traffic light). The updating S70 of the up-to-date value may comprise whether or not the message is a priority message based on the content of the message, e.g., upon having determined the identified one or more areas of interest.

If the forwarded message has been emitted from a remote emitter located in Zone A or Zone B, the updating S70, being based on the identified one or more areas of interest, may consist in doing nothing, because the dynamic information is already such that the up-to-date value is enabled, being the forwarded message coming from an area of interest with the highest nominal forwarding frequency among the predetermined set of non-zero forwarding frequencies. The method may further forward the message to other processes among the one or more processes.

If the forwarded message has been emitted from a remote emitter located in Zone C, and the forwarded message is not a priority message, the updating S70 of the dynamic information to enable an up-to-date value of the forwarding frequency may comprise adding the unique identifier in the dynamic information and updating the respective filtering duration by setting the starting value of the count-down timer to a value corresponding to the respective forwarding frequency (e.g., for a forwarding frequency of 1Hz, the starting value may be of 1 second). The adding of the unique identifier and the setting of the respective starting value of the count-down timer may be performed by a dedicated function (e.g., a CBP_ADD function) that adds the unique identifier in the hash table and sets the filtrating duration to the appropriate value corresponding to the respective forwarding frequency. This guarantees that the unique identifier remains in the dynamic information till the expiration of the respective filtering duration. The method may further forward the message to other processes among the one or more processes.

If the forwarded message has been emitted from a remote emitter located in Zone C, and the forwarded message is a priority message, the updating S70 of the dynamic information may comprise adding the unique identifier in the dynamic information and updating the respective filtering duration by setting the starting value of the count-down timer to a value corresponding to a respective higher forwarding frequency (e.g., for a forwarding frequency of 1Hz, the higher forwarding frequency may be 10Hz and the corresponding starting value may be 0.1 second). The method may further forward the message to other processes among the one or more processes.

If the forwarded message has been emitted from a remote emitter located in Zone D, and the forwarded message is not a priority message, the updating S70 of the dynamic information to enable an up-to-date value of the forwarding frequency may comprise adding the unique identifier in the dynamic information and updating the respective filtering duration by setting the starting value of the count-down timer to a value corresponding to the respective forwarding frequency (e.g., for a forwarding frequency of 0.3Hz, the starting value may be 3.3 seconds). The method may further forward the message to other processes among the one or more processes.

If the forwarded message has been emitted from a remote emitter located in Zone D, and the forwarded message is a priority message, the updating S70 of the dynamic information may comprise adding the unique identifier in the dynamic information and updating the respective filtering duration by setting the starting value of the count-down timer to a value corresponding to a respective higher forwarding frequency (e.g., for a forwarding frequency 0.3Hz, the higher forwarding frequency may be 1Hz and the corresponding starting value may be 1 second). The method may further forward the message to other processes among the one or more processes.

An example of implementation of the method in the second embodiment is now discussed.

In the second embodiment, the dynamic information may alternatively contain, for each unique identifier, an additional information specifying the respective (and different) forwarding frequency of each unique identifier among a predetermined set of non-zero forwarding frequencies. The respective forwarding frequency is a frequency at which to forward received messages to the one or more processes. For each remote emitter, the method comprises identifying S20 the unique identifier of the remote emitter of each received message. If the unique identifier is present in the dynamic information at the time of the reception of the received message, then the method comprises forwarding S30 the received message to the one or more processes based on the identified unique identifier and on the dynamic information. Else, i.e., the unique identifier is not present in the dynamic information at the time of the reception of the received message, then the method may comprise inserting the unique identifier of the new remote emitter in the dynamic information of the data storage when receiving a first message from the new remote emitter, and further processing the first message of the new remote emitter with steps S40-S70 (discussed below) to obtain a respective forwarding frequency, and using such obtained respective forwarding frequency. Alternatively, the method may comprise inserting the unique identifier of the new remote emitter in the dynamic information of the data storage when receiving the first message from the new remote emitter, and associating the highest forwarding frequency among the predetermined set of non-zero forwarding frequencies.

The one or more processes may be implemented in a V2X Stack. The V2X-Stack may contain the one or more processes where the forwarded messages are sent after the L2 filtration, each of the one or more processes may be implemented by a specific algorithm. FIG. 4 shows an example of implementation of a CBP decision-making algorithm for updating the dynamic information of the data storage.

The method may comprise an algorithm to evaluate certain triggering conditions before starting the CBP decision-making algorithm in the V2X-Stack for updating S70 the dynamic information of the data storage to enable an up-to-date value of the forwarding frequency (i.e., of the level priority) associated with the unique identifier of the respective remote emitter. The updating S70 may be based on the identified one or more areas of interest containing the identified location of the respective remote emitter and may be further based on the content of the message. The triggering conditions may relate to the TCU performances. For example, the triggering condition may be based on one or more thermal levels and/or one or more processing levels, and/or V2X channel performances. In examples, the triggering conditions may be based on a channel busy ratio and/or an indication on critical levels (e.g., 80%) of channel congestion. The triggering conditions may not be satisfied. In this case, a function (e.g., CBP_Reset Function) may rest the dynamic information, e.g., erasing all the unique identifiers previously stored in the hash table located in the Layer 2, e.g., setting to zero all the filtering durations.

In case the triggering conditions are met, the CBP decision-making algorithm starts the localization-based indexing (block 1A) comprising S40-S60 followed by the event prioritization (block 1B) comprising S70.

The obtaining S40 a set of areas of interest may be such that Zone A and Zone B have the same nominal forwarding frequency that is equal to the highest nominal forwarding frequency among the predetermined set of non-zero forwarding frequencies. In other words, Zone A and Zone B are high priority zones, i.e., each received message from remote emitters located in Zone A and in Zone B is forwarded to the one or more processes. Zone C has a respective nominal forwarding frequency equal to the low (or intermediate) priority forwarding frequency, i.e., only 10% of the received messages from remote emitters located in Zone C (considered disjoint from Zone A and Zone B) are forwarded to the one or more processes. Finally, the area covering the complement (e.g., the surroundings) of the union of Zone A, Zone B and Zone C has nominal forwarding frequency equal to the lowest nominal forwarding frequency among the predetermined set of non-zero forwarding frequencies, i.e., only 3.3% of the received messages from remote emitters located in the out-of-interest area are forwarded to the one or more processes.

For each message being forwarded to the one or more processes, the method comprises identifying S50 a location of the respective remote emitter and identifying S60 one or more respective areas of interest containing the identified location. The identifying S50 of the location of the respective remote emitter may comprise GPS coordinates included in the received message from the remote emitter.

The updating S70 of the up-to-date value is (firstly and primarily) based on the identified one or more areas of interest and (secondly or additionally or optionally) may be based on the content of the message, e.g., the message may contain an event flag, additional information about the vehicle type (e.g., an ambulance, a police car) or information about an infrastructure (e.g., a traffic light). The updating S70 of the up-to-date value may comprise whether or not the message is a priority message based on the content of the message, e.g., upon having determined the identified one or more areas of interest.

If the forwarded message has been emitted from a remote emitter located in Zone A or Zone B, the updating S70, being based on the identified one or more areas of interest, may consist in doing nothing, because the dynamic information is already such that the up-to-date value is enabled being the forwarded message coming from an area of interest with the highest nominal forwarding frequency among the predetermined set of non-zero forwarding frequencies. The method may further forward the message to other processes among the one or more processes.

If the forwarded message has been emitted from a remote emitter located in Zone C, and the forwarded message is not a priority message, the updating S70 of the dynamic information to enable an up-to-date value of the forwarding frequency may comprise adding the unique identifier in the dynamic information and keeping (e.g., overwriting) the respective forwarding frequency (e.g., 1Hz for low priority messages). The adding of the unique identifier and the and updating the respective forwarding frequency may be performed by a dedicated function (e.g., a CBP_ADD function) that adds the unique identifier in the hash table and sets the appropriate value corresponding to the respective forwarding frequency. The method may further forward the message to other processes among the one or more processes.

If the forwarded message has been emitted from a remote emitter located in Zone C, and the forwarded message is a priority message, the updating S70 of the dynamic information may comprise adding the unique identifier in the dynamic information and updating the respective forwarding frequency to the higher forwarding frequency (e.g., updating the respective forwarding frequency from 1Hz for low priority messages to 10Hz for high priority messages). The method may further forward the message to other processes among the one or more processes.

If the forwarded message has been emitted from a remote emitter located in Zone D, and the forwarded message is not a priority message, the updating S70 of the dynamic information to enable an up-to-date value of the forwarding frequency may comprise adding the unique identifier in the dynamic information and keeping (e.g., overwriting) the respective forwarding frequency (e.g., 0.3Hz for less relevant messages). The method may further forward the message to other processes among the one or more processes.

If the forwarded message has been emitted from a remote emitter located in Zone D, and the forwarded message is a priority message, the updating S70 of the dynamic information may comprise adding the unique identifier in the dynamic information and updating the respective forwarding frequency to the higher forwarding frequency (e.g., updating the respective forwarding frequency from 0.3 for less relevant messages to 1Hz for low priority messages). The method may further forward the message to other processes among the one or more processes. The updating S70 of the dynamic information of the data storage to enable an up-to-date value may comprise systematically writing the up-to-date value over the currently stored value, even if the currently stored value is already equal to the up-to-date value or, after comparing the up-to-date value with the currently stored value to determine whether an update is required or not.

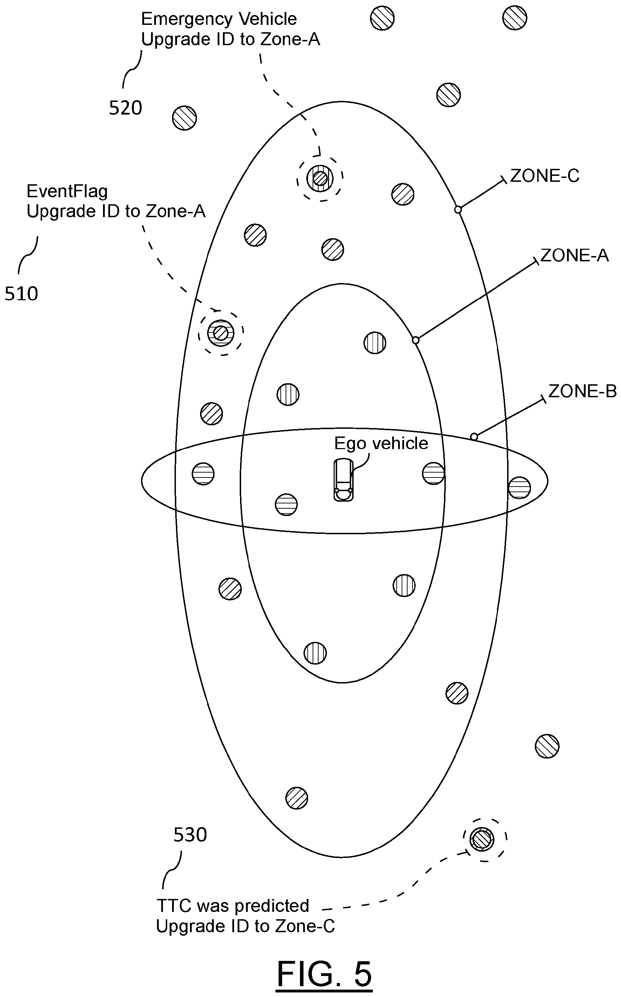

With reference to FIG. 5, if the priority message, having an even flag 510 or coming from an emergency vehicle 520, e.g., an ambulance or a police car, has been received from Zone C (the zone of low priority), the up-to-date value of the forwarding frequency is upgraded to the higher or consecutive value, i.e., to the nominal forwarding frequency of Zone A. In the first embodiment, the updating S70 of the dynamic information may comprise adding the unique identifier in the dynamic information and updating the respective filtering duration by setting the starting value of the count-down timer to a value corresponding to a respective higher forwarding frequency (e.g., for a forwarding frequency of 1Hz, the higher forwarding frequency may be 10Hz and the corresponding starting value of the count-down timer may be 0.1 second). In the second embodiment, the updating S70 of the dynamic information may comprise adding the unique identifier in the dynamic information and updating the respective forwarding frequency to the higher forwarding frequency (e.g., updating the respective forwarding frequency from 1Hz for low priority messages to 10Hz for high priority messages).

Still with reference to FIG. 5, for the sake of another example, if the priority message, carrying a Time-To-Collision (TTC) alert notification 530, has been received from the out-of-interest (i.e., Zone D, the additional area which covers a complement of the union of areas of Zone A, Zone B and Zone C), the up-to-date value is determined to be the upgraded value of the nominal forwarding frequency of Zone C (i.e., the higher consecutive value). In the first embodiment, the updating S70 of the dynamic information may comprise adding the unique identifier in the dynamic information and updating the respective filtering duration by setting the starting value of the count-down timer to a value corresponding to a respective higher forwarding frequency (e.g., for a forwarding frequency 0.3Hz, the higher forwarding frequency may be 1Hz and the corresponding starting value of the count-down timer may be 1 second). In the second embodiment, the updating S70 of the dynamic information may comprise adding the unique identifier in the dynamic information and updating the respective forwarding frequency to the higher forwarding frequency (e.g., updating the respective forwarding frequency from 0.3 for less relevant messages to 1Hz for low priority messages).

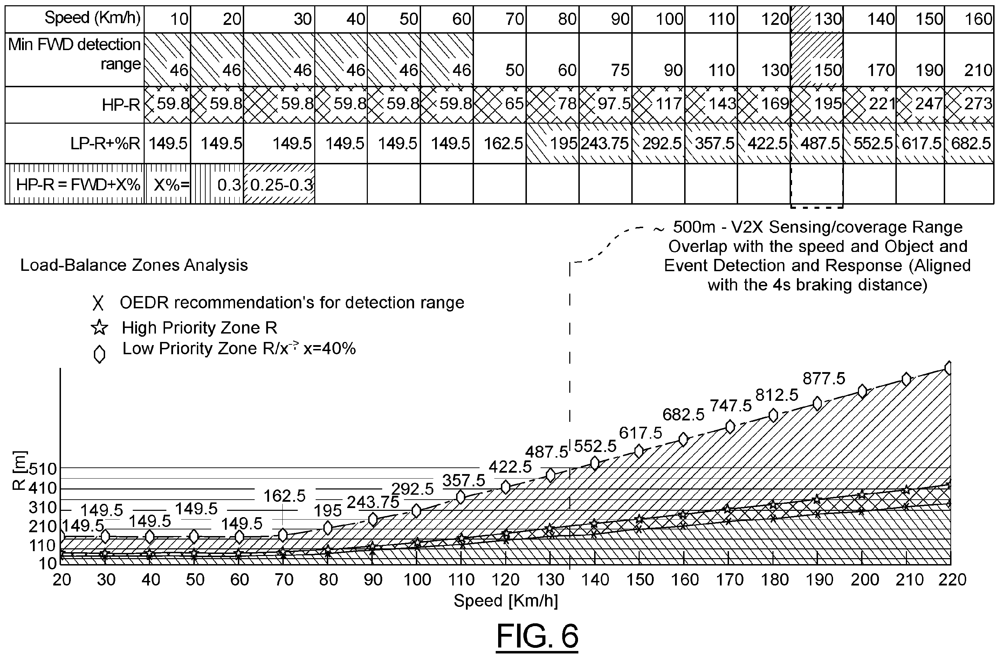

With reference to FIG. 6, it is shown an example of dynamic computation for the obtaining S40 of the set of areas of interest. The dynamic computation may comprise considering V2X sensing/coverage and safety recommendations (e.g., the 4-second braking distance rule) for the minimum forwarding (FWD) detection range as function of the instantaneous speed of the ego vehicle. The table in the upper part of FIG. 6 shows the instantaneous speed of the ego vehicle ranging from 10 Km/h to 160 Km/h. For each instantaneous speed value, it is shown the minimum FWD detection range, the computed high priority (HP) radius R and the computed low priority (LP) radius further corrected with a percentage of the radius R. The computed HP radius amounts to the minimum FWD detection range plus 30% of the minimum FWD detection range, instead the LP radius amounts to the HP radius divided by 0.4 (i.e., the HP radius amounts to 40% of the LP radius). The plot in the bottom part of FIG. 6 shows the radius R (in meters) as function of the instantaneous speed (in Km/h) of the ego vehicle. The radius may increase monotonically depending on the instantaneous speed and/or the direction of the ego vehicle.

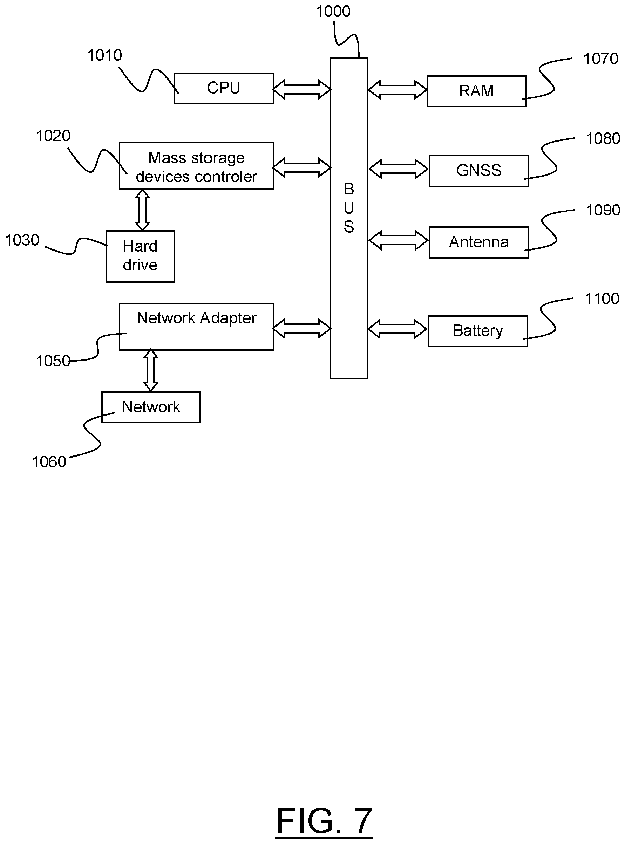

FIG. 7 shows an example of a TCU.

The TCU comprises a central processing unit (CPU) 1010 connected to an internal communication BUS 1000, a random access memory (RAM) 1070 also connected to the BUS. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A mobile communication unit such as a network adapter 1050 manages accesses to a network 1060.

The TCU may further comprise or (so as to form a broader system) be coupled to a battery 1100 for alimentation, a satellite navigation (GNSS) unit 1080 which keeps track of the latitude and longitude values of the position (location) of the ego vehicle, and an external interface 1090 for mobile communications (e.g., a GSM, GPRS, Wi-Fi, LTE or 5G antenna) which provides the tracked values to a centralized database server storing geographical information.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

## Claims

1. A method implemented by a Telematic Control Unit (TCU) of a vehicle for managing load during Vehicle-to-Everything (V2X) communications, the TCU being configured for executing one or more processes based on messages received from multiple remote emitters, the TCU comprising a data storage containing dynamic information representing a relation between unique identifiers, each of a respective remote emitter, and a respective filtering duration, the dynamic information enabling for each remote emitter a respective forwarding frequency among a predetermined set of non-zero forwarding frequencies, each forwarding frequency being a frequency at which to forward received messages to the one or more processes, the method comprising:
• receiving (S10) messages from multiple remote emitters, the messages being received at a respective receiving frequency for each respective remote emitter;
• identifying (S20) the unique identifier of the respective remote emitter of each received message;
• forwarding (S30) received messages to the one or more processes based on the identified unique identifier and on the dynamic information; and
• for each message among at least one message received from each respective remote emitter:
∘ obtaining (S40) a set of areas of interest each defined with respect to the vehicle, each area of interest having a nominal forwarding frequency;
∘ identifying (S50) a location of the respective remote emitter;
∘ identifying (S60) one or more respective areas of interest containing the identified location; and
∘ updating (S70) the dynamic information of the data storage to enable an up-to-date value of the forwarding frequency for the respective remote emitter, based on the identified one or more areas of interest.

2. The method of claim 1, wherein the obtained set of areas of interest comprises:
• one or more elongated areas, each elongated in the longitudinal direction of motion of the vehicle, and
• an additional area which covers a complement of the union of the other or all other areas of the set of areas of interest,
the nominal forwarding frequency of each elongated area of interest being higher than the nominal forwarding frequency of the additional area.

3. The method of claim 2, wherein the nominal forwarding frequency of the additional area is equal to the lowest forwarding frequency among the predetermined set of non-zero forwarding frequencies.

4. The method of any one of claims 1 to 3, wherein the obtained set of areas of interest further comprises:
• a first area elongated in the longitudinal direction of motion of the vehicle, and
• a second area elongated in the longitudinal direction of motion of the vehicle, the second area covering a periphery of the first area;
the nominal forwarding frequency of the first area being higher than the nominal forwarding frequency of the second area.

5. The method of claim 4, wherein the nominal forwarding frequency of the first area is the highest forwarding frequency among the predetermined set of non-zero forwarding frequencies, and/or the nominal forwarding frequency of the second area is an intermediate forwarding frequency among the predetermined set of non-zero forwarding frequencies.

6. The method of any one of claims 1 to 5, wherein the obtained set of areas of interest further comprises:
• an area elongated in the longitudinal direction of motion of the vehicle,
• a supplementary area which extends in the transversal direction of motion of the vehicle,
the nominal forwarding frequency of the elongated area being equal to the nominal forwarding frequency of the supplementary area,
wherein optionally the nominal forwarding frequency of the elongated area and the nominal forwarding frequency of the supplementary area are equal to the highest forwarding frequency among the predetermined set of non-zero forwarding frequencies.

7. The method of any one of claims 2 to 6, wherein each elongated area is shaped as an ellipse.

8. The method of any one of claims 1 to 7, wherein each area of interest is centered on the location of the vehicle.

9. The method of any one of claims 1 to 8, wherein updating the dynamic information of the data storage to enable an up-to-date value is, when the nominal forwarding frequency of the identified one or more areas of interest is not the highest frequency among the predetermined set of non-zero forwarding frequencies, further based on a content of the message.

10. The method of claim 9, wherein updating the dynamic information of the data storage to enable an up-to-date value comprises:
• determining whether or not the message is a priority message based on the content of the message,
wherein:
o if the message is determined not to be a priority message, then the up-to-date value is determined to be the nominal forwarding frequency of the identified one or more areas of interest;
o else:
▪ if the nominal forwarding frequency of the identified one or more areas of interest is the highest forwarding frequency among the predetermined set of non-zero forwarding frequencies, then the up-to-date value is determined to be said highest forwarding frequency;
▪ else, the up-to-date value is determined to be an upgraded value of the nominal forwarding frequency of the identified one or more areas of interest.

11. The method of any one of claims 1 to 10, wherein the method comprises dynamically computing the set of areas of interest, a size of the areas of interest monotonously increasingly depending on an instantaneous speed and/or direction of the vehicle, wherein optionally the computing of the set of areas of interest is based on a set of Object and Event Detection Response (OEDR) safety recommendations.

12. The method of any one of claims 1 to 11, wherein the method comprises evaluating a triggering condition, the identifying and forwarding for received messages from each respective remote emitter, and the obtaining, identifying a location, identifying one or more respective areas of interest, and updating, for each message among at least one message received from each respective remote emitter, being performed as a result of a positive evaluation of the triggering condition; wherein optionally the triggering condition relates to TCU performance, the triggering condition being for example based on one or more thermal levels and/or on one or more processing levels, and/or the triggering condition relates to V2X channel performance, the triggering condition being for example based on a channel busy ratio and/or on an indication on channel congestion critical levels.

13. A computer program comprising instructions which, when the program is executed by a TCU, cause the TCU to carry out the method of claims 1 to 12.

14. A computer readable storage medium having recorded thereon the computer program of claim 13.

15. A TCU comprising a processor coupled to a memory, the memory having recorded thereon the computer program of claim 13.
